# EUROPÄISCHE PATENTSCHRIFT

(11) **EP 2 184 231 B1**
(45) Veröffentlichungstag und Bekanntmachung des Hinweises auf die Patenterteilung: **06.07.2011**
(21) Anmeldenummer: 08019546.4
(22) Anmeldetag: 07.11.2008
(51) Int. Cl.: B64D 11/04

(54) **Räumlichkeitsstruktur, insbesondere zur Verwendung für Galleys**
Spatial structure, especially for using galleys
Structure de local, notamment destinée à l'utilisation pour des offices

(43) Veröffentlichungstag der Anmeldung: 12.05.2010
(73) Patentinhaber: Technische Universität Hamburg-Harburg, 21073 Hamburg (DE); TuTech Innovation GmbH, 21079 Hamburg (DE)
(72) Erfinder: Kipp, Thomas, 22767 Hamburg (DE); Gumpinger, Thomas, 21073 Hamburg (DE); Krause, Dieter, 21244 Buchholz (DE)
(74) Vertreter: Sparing Röhl Henseler Patentanwälte European Patent Attorneys

(56) Entgegenhaltungen:
- EP-B1- 1 551 709
- GB-A- 191 318 180
- US-A- 4 776 903
- US-B1- 6 761 332

## Beschreibung

Die Erfindung betrifft eine Räumlichkeitsstruktur, insbesondere zur Verwendung für Galleys nach dem Oberbegriff des Anspruchs 1.

Galleys, so genannte Bordküchen, die zum Einsatz kommen, insbesondere in Flugzeugen, Zügen und Schiffen, sind Teil der Innenausstattung und müssen möglichst gewichtsoptimiert sein. Die Reduktion des Eigengewichts erhöht die Wirtschaftlichkeit und die Umweltverträglichkeit. Die Eigengewichtsreduzierung kann unter anderem durch die Reduzierung der Masse der Innenausstattung erreicht werden. Bordküchen sind Teil des Käbineninterieurs und tragen somit zur Gesamtmasse des Flugzeuges bei.

Die Mehrzahl der Flugzeug-Galleys basiert auf einer Tragstruktur aus GFK-Sandwichplatten, den so genannten Panels aus Glasfaserverbundwerkstoffen. Sie bestehen aus lasttragenden GFK-Deckschichten, die durch eine Wabenstruktur auf Abstand gehalten werden. Zum Aufbau einer Tragstruktur werden diese Panels meist durch Verschrauben miteinander verbunden. Dazu werden metallische, mit Gewinden versehene Hülsen, die sogenannten Inserts, verwendet. Diese Inserts werden mit den Panels verklebt und erhöhen das Gewicht der Struktur. Mit Hilfe dieser Struktur kann jedoch eine hohe Biegefestigkeit erreicht werden. Galleys, die aus Platten bestehen, sind für das Aufnehmen von Biegebelastung gut beschaffen, sie sind jedoch bezüglich Zug- und Druckspannungen nicht optimal dimensioniert. Weiterhin bekannt sind Galley-Tragwerke aus Aluminiumprofilen und -blechen, die insbesondere eine lange Lebensdauer besitzen und einfach reparierbar sind.

Die Fertigung der bekannten Galleys ist kaum automatisiert und mit hohen Kosten verbunden, wie beispielsweise aus DE 603 04 351 T2 bekannt ist.

Aufgabe der Erfindung ist es daher, eine Räumlichkeitsstruktur zur Verwendung für Galleys zu schaffen, die individuell anpassbar und belastbar ist und dabei eine Gewichtsreduzierung gegenüber solchen aus Sandwichplatten erlaubt.

Diese Aufgabe wird durch die Merkmale des Anspruchs 1 gelöst.

Hierdurch wird eine Räumlichkeitsstruktur geschaffen, die die aus Sandwichplatten bestehende Tragstruktur der Galley durch ein Fachwerk aus Stabelementen, vorzugsweise Kohlefaserverbundstäben, ersetzt. Dieses Stabwerk ist in der Lage, die Belastungen aufzunehmen, die durch die Beschleunigung von Galley-Einbauten wie z.B. Öfen oder Trolleys entstehen, wobei die Auswechslung der Paneltragstruktur durch ein Stabwerk vor allem eine Gewichtsreduktion der Galley bewirkt. Das Stabwerk mit separater Formgebung der Galley ermöglicht dabei, individuelle Tragwerke zu gestalten, so dass der Kundenwunsch der Airlines nach individuellen Galleys erfüllt werden kann. Anstelle eines Flächentragwerks ist erfindungsgemäß ein Linientragwerk vorgesehen.

Das erfindungsgemäße Stabwerk setzt Stabelemente dort ein, wo Bauteilbeanspruchungen auftreten, so dass alleine durch dieses Stabwerk die Lasten aufgenommen werden können. Das Stabwerk überträgt Lasten hauptsächlich über Druck- und Zugkräfte, die das Material effektiver ausnutzt als Biegebelastung. Durch die bessere Materialausnutzung bei Zug- und Druckbelastung ergibt sich ein Potential der Massenreduktion.

Das Stabwerk ist zudem äußerst leicht. Der gewonnene Freiraum kann für zusätzliche Funktionen genutzt werden, so dass insgesamt das Nutzvolumen vergrößert wird. Die Formgebung an den Stellen, wo Flächen benötigt werden, erfolgt durch Einbringen eines Schaumwerkstoffes, der aber keine Beanspruchung mehr aufnehmen muss, sondern nur dazu da ist, die erforderliche Fläche zu erzeugen. Die Gewichtsersparnis gegenüber herkömmlichen Galleys beträgt bei gleicher Festigkeit bis zu ca. 50%, was ca. 150 kg Gewichtsersparnis für ein A320-Flugzeug bedeutet.

Das räumliche Stabwerk kann über eine Topologieoptimierung und die dadurch ermittelten Kräftepfade auf minimales Volumen und/oder minimale Nachgiebigkeit ausgelegt werden, wobei die jeweils maßgeblichen Lastfälle berücksichtigt werden können. Durch die so erreichbare optimale Positionierung der Stabelemente kann erreicht werden, dass die jeweils vorliegenden Belastungen bei geringer Tragwerksmasse aufgenommen werden können. Eine errechenbare Referenzstruktur kann als Schablone für die Positionierung der Stabelemente verwendet werden.

Zum Aufbau des Stabwerks können Stabelemente hinsichtlich eines Profils ausgewählt werden. Verbindungselemente zur Verknüpfung der Stabelemente zu einem Tragwerk sind ebenfalls wählbar. Ziel ist insoweit vor allem die einfache und kostengünstige Fertigbarkeit des Tragwerks.

Weiterhin können Krafteinleitungselemente vorgesehen sein, die in der Lage sind, die von Galley-Einbauten ausgeübten Lasten in das Stabwerk direkt einzuleiten.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels der Erfindung näher erläutert.
Fig. 1 zeigt schematisch eine Räumlichkeitsstruktur zur Verwendung für Galleys mit einem ausgeschäumtem Stabwerk für eine gewählte Räumestruktur,
Fig. 2 zeigt schematisch das Stabwerk der Räumlichkeitsstruktur gemäß Fig. 1,
Fig. 3 zeigt schematisch die Räumlichkeitsstruktur gemäß Fig. 1 teilweise ohne Ausschäumung unter abschnittsweiser Darstellung des Stabwerkes gemäß Fig. 2.

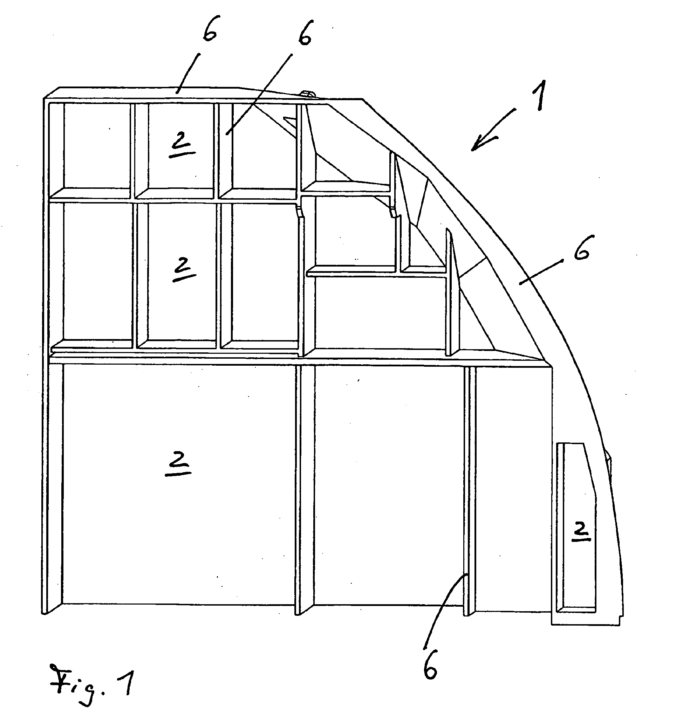

Die Fig. 1 zeigt eine Räumlichkeitsstruktur 1 zur Verwendung für Galleys, die eine mindestens teilweise geschlossene Raumumschließung mit abgeteilten, jeweils eine Zugangsöffnung aufweisenden Räumen 2 bildet. Die Räumlichkeitsstruktur 1 umfasst ein Tragwerk mit Seiten-, Böden- und Dachwänden 6 für eine wählbare Räumestruktur, d.h. insbesondere Anzahl, Größe, Form und Anordnung der Räume 2 einer Galley, zur Aufnahme von Kücheneinbauten wie z. B. Öfen, Getränkemaschinen, Brötchenwärmer oder zum Einstellen von mobilen Gegenständen wie z. B. Abfall-Trolleys. Von diesen Einbauten einer Galley gehen neben der Eigenmasse der Galley die Hauptbelastungen aus, da beispielsweise während eines Fluges Beschleunigungen der Einbauten in allen Raumrichtungen auftreten können. Die resultierenden Massenkräfte nimmt das Tragwerk der Räumlichkeitsstruktur 1 bzw. der Galley-Räumlichkeitsstruktur auf.

Gemäß Fig. 1 bis Fig. 3 umfasst das Tragwerk ein Stabwerk 3 mit einer Vielzahl untereinander verknüpfter Stabelemente 4. Die Stabelemente 4 des Stabwerkes 3 sind über Stabknotenpunkte 5 derart verbunden, dass der Verlauf der Stabelemente 4 an die im Lastfall auftretenden Kräftepfade der jeweiligen Räumestruktur der Galley angepasst ist. Das Stabwerk 3 ist somit eine räumliche Struktur aus zusammengesetzten Stabelementen 4, die ein Tragwerk bilden.

Ferner ist an dem Stabwerk 3 die wählbare Räumestruktur durch Formgebung unter Einbringung eines Schaumwerkstoffes ausbildbar. Durch ein Schäumen können Seiten-, Böden- und/oder Dachwände 6 unter Einbettung des Stabwerks 3 gebildet werden, wie Fig. 1 zeigt. Das Stabwerk 3 als tragende Fachwerkstruktur einer Galley ist aus der Räumestruktur der herzustellenden Räumlichkeitsstruktur 1 ableitbar. Dies beinhaltet im wesentlichen den Schritt der Kräftepfadberechnung für die Räumlichkeitsstruktur 1, d.h. einer Galley mit gewählter Räumestruktur.

Für eine Topologieoptimierung des Stabwerks 3 können die im Lastfall auftretenden Kräftepfade einer Galley eine Schablone bilden zur Ausbildung eines topologieoptimierten Stabwerkes 3. Die Topologieoptimierung des Stabwerks 3 ist für ein minimales Volumen und/oder eine minimale Nachgiebigkeit der wählbaren Räumestruktur der Räumlichkeitsstruktur 1 auslegbar. Optimierbar ist insoweit die Anordnung der Stabelemente 4, die Wahl eines Profilquerschnitts der Stabelemente 4, die Gestaltung von Verbindungselementen an den Stabknotenpunkten 5 sowie die Auswahl eines Materials für die Stabelemente 4, da diese Parameter einen wesentlichen Einfluss haben auf die Festigkeit und Steifigkeit des Stabwerks 3.

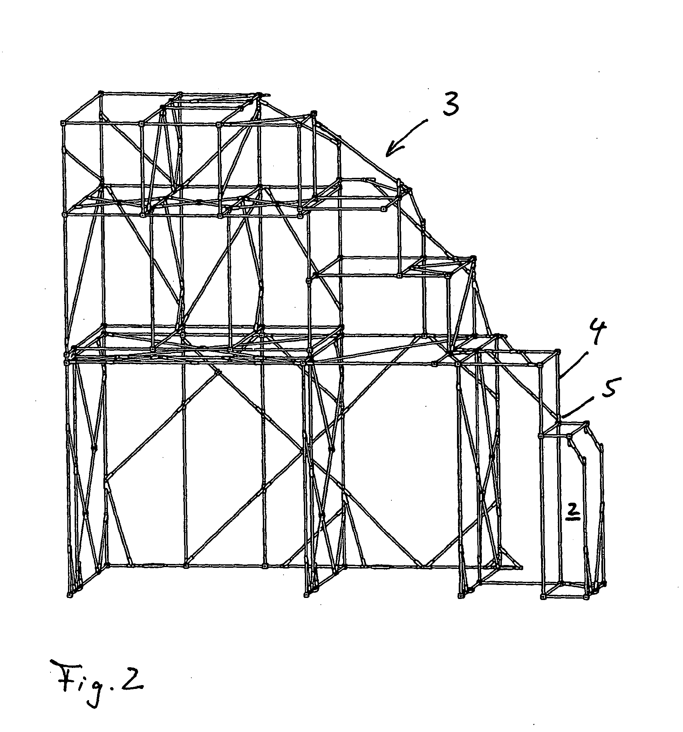

Die Räumlichkeitsstruktur 1 mit einer wählbaren Räumestruktur bestimmt ein Galley-Modell. Dieses Galley-Modell kann einer Topologieoptimierung unterworfen werden, wodurch modifizierte Kräftepfade errechnet werden, an die das topologieoptimierte Stabwerk 3 als Tragwerk anpassbar ist. Die modifizierten Kräftepfade bestimmen vorzugsweise ein Linientragwerk, das für vorgegebene Lastfälle im Betrieb der Galley optimale Steifigkeiten bei minimalem Gewicht besitzt. Die Zielvariable der Optimierung ist vorzugsweise die Reduktion der Masse bzw. des Volumens bzw. die Minimierung der Nachgiebigkeit. An beispielsweise eine gewichtsoptimierte Räumlichkeitsstruktur 1 ist das Stabwerk 3 gemäß Fig. 2 angepasst.

Das auf Basis berechneter Kräftepfade der Räumlichkeitsstruktur 1 mit wählbarer Räumestruktur sich ergebende Linienkraftwerk dient derart zur Platzierung der Stabelemente 4 zu dem Stabwerk 3, dass es als eine Schablone dient, an die die Platzierung der Stabelemente 4 angepasst ist. Um jeden Kräftepfad exakt abzubilden, würde es einer hohen Anzahl unterschiedlicher Verbindungswinkel der zusammengesetzten Stabelemente 4 bedürfen. Überraschenderweise wurde festgestellt, dass der Verlauf der Stabelemente 4 vom Verlauf der berechneten Kräftepfade abweichen kann, wenn zumindest eine Anpassung an den Verlauf der berechneten Kräftepfade gegeben ist. Die Fertigung ist daher kostengünstig, da die Anzahl der unterschiedlichen Verbindungswinkel eingeschränkt werden kann. Beispielsweise können nur diskrete Winkelabstufungen, wie beispielsweise 15°, 30°, 45°, 60°, 75° und 90°, verwendet werden an den Stabknotenpunkten 5.

Die Stabelemente 4 bestehen vorzugsweise aus kohlefaserverstärktem Kunststoff und sind hauptsächlich belastet durch Zug- und/oder Druckbelastungen.

Die Stabelemente 4 besitzen vorzugsweise eine wählbare Profilform. Leicht biegebelastete Stabelemente 4 besitzen vorzugsweise ein Rohrprofil, insbesondere ein Vierkanthohlprofil, während stark biegebelastete Stabelemente 4 vorzugsweise als I-Träger ausgebildet sind. Krafteinleitungselemente zur Fixierung von Einbauten in den Räumen der Räumestruktur sind vorzugsweise unmittelbar an den Stabelementen 4 des Stabwerks 3 befestigt. Die Krafteinleitungselemente können beispielsweise stab- oder leistenförmig ausgebildet sein.

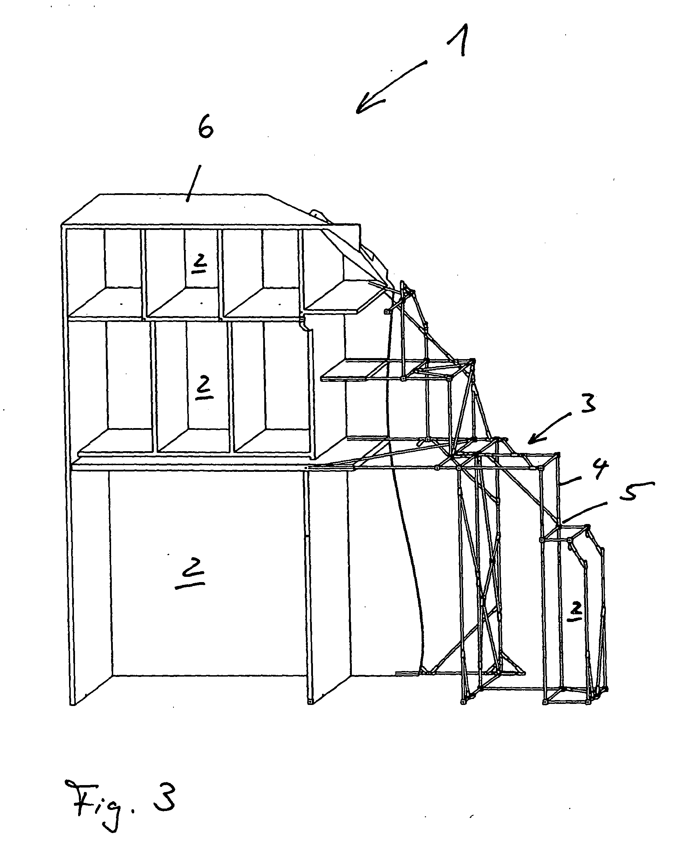

Die Substitution des aus Sandwichpanelen aufgebauten Flächentragwerks durch das Stabwerk 3 ist kombiniert mit einer separaten Formgebung der Räumlichkeitsstruktur 1, wie insbesondere Fig. 3 zeigt. Der Formgebungswerkstoff soll hier jedoch keine bzw. eine nur eingeschränkte strukturale Funktion übernehmen. Um dies zu gewährleisten, werden lasttragende Krafteinleitungselemente verwendet, die sogenannten Inserts, die Einbauten (Öfen, Trolleys etc.) haltern. Als Formgebungswerkstoff ist beispielsweise ein Harz oder ein Schaumstoff vorgesehen. Als Schaumstoff bevorzugt ist beispielsweise Polyurethanschaum. Beim Einsatz für Flugzeug-Galleys muss der Schaumstoff Luftfahrt zugelassen sein. Die Formgebung legt das Design der Räumlichkeitsstruktur 1 fest und bietet Arbeits- und Ablageflächen.

Das Stabwerk 3 ist also in der Lage, die durch die Beschleunigung der Räumlichkeitsstruktur 1 entstehenden Massenkräfte der Einbauten aufzunehmen. Die Formgebung durch Schäumung liefert das Design. Die physikalischen Verbindungen zwischen den Galley-Einbauten und dem Stabwerk 3 erfolgen über Krafteinleitungselemente, den Inserts, die die Galley-Einbauten fixieren. Die Galley-Einbauten werden über diese Krafteinleitungselemente an das Stabwerk 3 angeschlossen.

## Patentansprüche

1. Räumlichkeitsstruktur zur Verwendung für Galleys, die eine mindestens teilweise geschlossene Raumumschließung mit abgeteilten, jeweils eine Zugangsöffnung aufweisenden Räumen (2) bildet, umfassend ein Tragwerk mit Seiten-, Böden- und Dachwänden (6) für eine wählbare Räumestruktur, **dadurch gekennzeichnet, dass** das Tragwerk ein Stabwerk (3) umfasst, dessen Stabelemente (4) über Stabknotenpunkte (5) derart verbunden sind, dass der Verlauf der Stabelemente (4) angepasst ist an ein auf Basis im Lastfall berechneter Kräftepfade der jeweiligen Räumestruktur sich ergebendes Linienkraftwerk, und an dem Stabwerk (3) die wählbare Räumestruktur durch Formgebung unter Einbringung eines Schaumwerkstoffes ausgebildet ist.

2. Räumlichkeitsstruktur nach Anspruch 1, **dadurch gekennzeichnet, dass** das Stabwerk (3) ein topologieoptimiertes Stabwerk (3) zur Optimierung eines minimalen Volumens und/oder einer minimalen Nachgiebigkeit der wählbaren Räumestruktur ist.

3. Räumlichkeitsstruktur nach Anspruch 1 oder 2, **dadurch gekennzeichnet, dass** die Stabelemente (4) aus kohlefaserverstärktem Kunststoff bestehen.

4. Räumlichkeitsstruktur nach einem der Ansprüche 1 bis 3, **dadurch gekennzeichnet, dass** die Stabelemente (4) mit diskreten Winkelabstufungen in den Stabknotenpunkten (5) zusammengesetzt sind.

5. Räumlichkeitsstruktur nach einem der Ansprüche 1 bis 4, **dadurch gekennzeichnet, dass** die Stabelemente (4) eine wählbare Profilform besitzen.

6. Räumlichkeitsstruktur nach Anspruch 5, **dadurch gekennzeichnet, dass** leicht biegebelastete Stabelemente (4) ein Rohrprofil besitzen, während stark biegebelastete Stabelemerite (4) als I-Träger ausgebildet sind.

7. Räumlichkeitsstruktur nach einem der Ansprüche 1 bis 6, **dadurch gekennzeichnet, dass** Krafteinleitungselemente zur Fixierung von Einbauten in den Räumen (2) der Räumestruktur am Stabwerk (3) angeschlossen sind.

## Claims

1. Spatial structure, for use for galleys, which forms an at least partly closed-off space enclosure that has divided-off compartments (2) each having an access opening, comprising a supporting frame having side, bottom and top walls (6) for a pre-arrangable compartment structure, **characterised in that** the supporting frame comprises a truss arrangement (3), the truss elements (4) of which are so connected by means of truss nodes (5) that the disposition of the truss elements (4) is matched to the arrangement of lines of force that is produced on the basis of force paths of the particular compartment structure that are calculated for the loaded state, and the pre-arrangable compartment structure is constructed on the truss arrangement (3) by being formed through the introduction of a foam material.

2. Spatial structure according to claim 1, **characterised in that** the truss arrangement (3) is a topology-optimised truss arrangement (3) for optimisation of a minimal volume and/or minimal give of the pre-arrangable compartment structure.

3. Spatial structure according to claim 1 or 2, **characterised in that** the truss elements (4) are made of carbon-fibre-reinforced plastics material.

4. Spatial structure according to one of claims 1 to 3, **characterised in that** the truss elements (4) are put together using discrete angular gradations at the truss nodes (5).

5. Spatial structure according to one of claims 1 to 4, **characterised in that** the truss elements (4) have a cross-sectional shape which can be chosen at will.

6. Spatial structure according to claim 5, **characterised in that** truss elements (4) subjected to light bending loads have a tube cross-section whilst truss elements (4) subjected to heavy bending loads are in the form of I-beams.

7. Spatial structure according to one of claims 1 to 6, **characterised in that** force introduction elements are connected to the truss arrangement (3) for the fixing of units to be fitted into the compartments (2) of the compartment structure.

## Revendications

1. Structure de rangement destinée à être utilisée pour des offices, laquelle forme une délimitation d'un espace fermé au moins en partie avec des compartiments (2) munis d'une ouverture d'accès, comportant une ossature avec des parois latérales, des parois inférieures et des parois supérieures (6) pour une structure de rangement au choix, **caractérisée en ce que** l'ossature comporte une structure en barres (3), dont les barres (4) sont assemblées les unes aux autres par des points de jonction (5), de telle sorte que le tracé des barres (4) est ajusté à une structure de force linéaire qui résulte des trajets des forces, calculés sur la base d'un cas de charge, de la structure de rangement respective, et la structure de rangement au choix est réalisée par formage, moyennant l'introduction d'un matériau à base de mousse, sur la structure en barres (3).

2. Structure de rangement selon la revendication 1, **caractérisée en ce que** la structure en barres (3) est une structure en barres (3) à topologie optimisée, pour l'optimisation d'un volume minimum et/ou d'une flexibilité minimale de la structure de rangement au choix.

3. Structure de rangement selon la revendication 1 ou 2, **caractérisée en ce que** les barres (4) sont réalisées en matière plastique renforcée par des fibres de carbone.

4. Structure de rangement selon l'une quelconque des revendications 1 à 3, **caractérisée en ce que** les barres (4) sont assemblées avec des graduations angulaires discrètes dans les points de jonction (5).

5. Structure de rangement selon l'une quelconque des revendications 1 à 4, **caractérisée en ce que** les barres (4) ont une forme profilée au choix.

6. Structure de rangement selon la revendication 5, **caractérisée en ce que** des barres (4) faiblement sollicitées en flexion ont un profil tubulaire, alors que les barres (4) fortement sollicitées en flexion sont réalisées sous la forme de support en I.

7. Structure de rangement selon l'une quelconque des revendications 1 à 6, **caractérisée en ce que** des éléments d'introduction des forces, destinés à la fixation d'inserts dans les compartiments (2) de la structure de rangement, sont attachés à la structure en barres (3).
